# EUROPEAN PATENT SPECIFICATION

(11) **EP 2 678 220 B1**
(45) Date of publication and mention of the grant of the patent: **11.10.2017**
(21) Application number: 12750260.7
(22) Date of filing: 27.02.2012
(51) Int. Cl.: B64C 27/00, B64C 25/32, B64C 25/56

(54) **BUOYANCY SYSTEM**
AUFTRIEBSSYSTEM
SYSTÈME DE FLOTTABILITÉ

(30) Priority: 25.02.2011 AU 2011900642
(43) Date of publication of application: 01.01.2014
(73) Proprietor: Archimedes Pty Ltd, Perth, Western Australia 6000 (AU)
(72) Inventor: LYONS, Tim, Shoalwater, Western Australia 6010 (AU)
(74) Representative: FRKelly
(86) International application number: PCT/AU2012/000192
(87) International publication number: WO 2012/113038

(56) References cited:
- EP-A1- 0 091 660
- WO-A1-2010/065999
- GB-A- 2 457 719
- US-A- 1 833 646
- US-A- 2 544 794
- US-A- 3 273 832
- US-A1- 2004 226 498

## Description

### Field of the Invention

The present invention generally relates to a buoyancy system for keeping aircraft afloat.

### Background Art

There are inherent difficulties and limitations associated with current in-built buoyancy /floatation systems fitted to aircraft, which are typically permanently attached to the aircraft. Permanently fitted buoyancy/floatation systems add significant weight to the airframe, increasing fuel consumption, maintenance hours and additional cost whilst reducing endurance, payload and the overall capability of the aircraft. For these reasons, incorporating permanent buoyancy/floatation systems into multi role aircraft is often deemed not feasible. Hence many multi role aircraft do not have emergency buoyancy/floatation systems fitted.

Multi role aircraft such as military Blackhawk helicopters are often employed by Defence Forces to perform operations over water. In most cases such aircraft are not fitted with a system that can provide sufficient buoyancy to keep the aircraft afloat, which is a problem should they ditch or crash into water. History continues to demonstrate that aircraft generally sink very quickly once they ditch or crash into water. This poses a significant risk to the aircraft and their crew when operating over water.

Buoyancy and floatation systems currently fitted to marine helicopters are generally heavy in weight, reducing the aircraft's capability and performance.

Additionally, in most helicopters the inflatable buoyancy bags are positioned to inflate low on the airframe. As most helicopters have a high centre of gravity due to the positioning of the engine(s), transmission and rotor hub, the inflated inflatable buoyancy bags, tend to cause the aircraft to overturn and sit upside down in the water, presenting disorientation problems to the submerged crew and passengers, and increasing the difficulty to rescue the crew and passengers.

The preceding discussion of the background to the invention is intended only to facilitate an understanding of the present invention. It should be appreciated that the discussion is not an acknowledgment or admission that any of the material referred to was part of the common general knowledge as at the priority date of the application. WO 2010/065999 A1 discloses a buoyancy system according to the preamble of claim 1.

### SUMMARY OF INVENTION

The buoyancy system of the present invention provides a light weight emergency floatation solution for aircraft operating over a body of water. The primary objective of the buoyancy system is to provide sufficient time for aircraft occupants to safely egress an aircraft after an event that has lead to the aircraft landing, crashing or ditching into a body of water. A secondary objective of the buoyancy system is to assist in the recovery of the aircraft including the recovery of any cryptographic, weapons, sensitive or other valuable materials, and to assist subsequent aircraft investigation.

The present invention provides a buoyancy system according to claim 1. The buoyancy system is notably adapted to be fitted to an aircraft for keeping the aircraft afloat, upon landing, crashing or ditching into a body of water, the system comprises:
at least one inflatable body which, when inflated, increases the buoyancy of the aircraft;
an inflation apparatus to inflate the at least one inflatable body;
an activation system to activate the inflation apparatus where upon meeting activation criteria or upon manual activation, the activation system will activate the inflation apparatus causing a gas to flow to the at least one inflatable body, which once inflated to the required volume enables the aircraft to remain positively buoyant at the surface of a body of water;
a deployment means, such that in operation the deployment means restricts the inflation of the at least one inflatable body until the at least one inflatable body can be inflated without being damaged by moving parts of the aircraft.

Preferably, the at least one inflatable body is adapted to be positioned on the aircraft such that once inflated the positioning of the at least one inflatable body ensures the aircraft is maintained in an upright position. This assumes that the main portion of the aircraft remains largely intact and/or the at least one inflatable body remains secured to the aircraft. Obviously if the centre of gravity changes significantly as a result of the crash, or the at least one inflatable body is no longer secured to the aircraft then the weight distribution changes significantly, resulting in different buoyancy requirements.

In contrast to the prior art, the deployment means of the present invention enables the at least one inflatable body to be positioned closer to the centre of gravity of the aircraft once inflated. As a result, when the at least one inflatable body inflates, the positioning of the at least one inflatable body causes the helicopter to be maintained afloat. The deployment means ensures that the at least one inflatable body does not inflate until such time as those moving parts of the aircraft which are in the vicinity of the at least one inflatable body can no longer damage the inflatable body. In those cases in which the aircraft is a helicopter, the deployment device ensures the at least one inflatable body does not inflate until such time as the blades of the helicopter have detached from the helicopter, or have stopped rotating.

Preferably the at least one inflatable body will inflate into a position that will keep the aircraft upright at the surface of a body of water.

In one application the aircraft is a helicopter, wherein when fitted, the inflated at least one inflatable body is in proximity to the engine. This counters a high centre of gravity in helicopter aircraft.

In a deflated condition, the at least one inflatable body may be stored at any position on the aircraft. Preferably the at least one inflatable body is stored in proximity to the position the at least one inflatable body is required when inflated.

Preferably the deployment means is in the form of a time delay device whereby the at least one inflatable body inflates after a prescribed period of time following manual activation of the activation system or after a prescribed period of time following the activation criteria being meet. Preferably the deployment means is incorporated in the activation system.

Preferably the at least one Inflatable body incorporates internal walls and one way valves to reduce the effects of punctures that may result from damaged areas of the aircraft which may be caused when the aircraft crashes or ditches into a body of water.

In many applications the inflated inflatable body will contact with the body of the aircraft adjacent the engine, in order to keep the aircraft in an upright position. Preferably the at least one inflatable body is made from a material having high heat resistance properties.

Once inflated the inflatable body may remain Inflated for a predetermined period of time, generally until the aircraft is recovered.

Preferably the at least one inflatable body is made from a gas tight material. This will ensure the gas is held In the inflatable body for a long period of time ensuring there Is ample time to rescue the crew, and preferably the aircraft.

Preferably the at least one inflatable body is made from a light weight, high tensile strength material. This will reduce the weight of the buoyancy system.

Preferably the buoyancy system comprises a plurality of inflatable bodies.

The at least one Inflatable body may also comprise a one way valve between the inflation apparatus and an opening into the inflatable body. This will prevent the gas delivered into the inflatable body returning to the inflation apparatus.

The at least one inflatable body may comprise at least one pressure relief valve to release excess gas from the inflatable body. The requirement to release excess gas may be as a result of excess gas generated by the inflation apparatus.

Preferably the buoyancy system comprises an inflation apparatus for each inflatable body.

Preferably upon inflation each inflatable body inflates external of the aircraft.

The inflation apparatus may comprise a regulatory apparatus to regulate the amount of gas passing into the at least one inflatable body. Preferably the gas regulator delivers gas to the at least one Inflatable body at the desired pressure.

The inflation apparatus may comprise a gas generation system, or a gas storage system, or a combination of these systems.

The gas generation system may comprise a gas generating medium such as for example an explosive, propellant or other chemical compound whereby a charge activates the medium, creating a gas.

Preferably the gas generated from the medium is cooled prior to being delivered to the at least one inflatable body.

The gas storage system may comprise a gas storage cylinder containing the gas. Preferably the gas storage cylinder Is in fluid communication with the at least one inflatable body through an outlet passage.

Preferably the gas storage cylinder are light weight. The cylinders may be a carbon fibre composite material. Preferably the molecular weight of the generated gas is less than that of air.

The inflation apparatus may comprise at least one hydrostatic sensor or pressure relief valve which is adapted to discontinue the delivery of gas to the at least one inflatable body once ascent has commenced when activation occurs after the aircraft is submerged. Once the ascent has commenced the inflatable body will continue to inflate even if there was no more gas being provided to the inflatable body as the gas inside the inflatable body expands with the reduction in external pressure.

The activation system may comprise a plurality of sensors. Each sensors may be adapted to detect different parameters. Preferably the activation system comprises a combination of sensors and may include hydrostatic, water, altimeter or shock or impact sensors.

The activation system may be activated in a variety of ways , largely dictated by the type of aircraft and its roles and functions in the marine environment. This is particularly important to ensure that the buoyancy system can be activated regardless of the situation.

The activation system may activate automatically when the aircraft enters a body of water. Preferably a sensor detects when the aircraft is partially or wholly submerged, whereupon the activation system activates the inflation apparatus.

The activation system may be hydrostatically activated when the aircraft reaches a predetermined depth. Preferably a sensor detects when the aircraft reaches a certain depth, whereupon the activation system activates the inflation apparatus. The sensor may comprise one or more hydrostatically operated devices or other automatic activation sensors fitted to the buoyancy system.

The activation system may be water activated when sensors come into contact with excessive water. The automatic activation mechanism may comprise one or more water activated sensor devices or other automatic activation sensors fitted to the buoyancy system.

The activation system may be activated when the aircraft's rate of decent exceeds a predetermined limit. Preferably one or more altimeter sensors detect when the aircraft's rate of decent exceeds a predetermined limit, whereupon the activation system activates the inflation apparatus. The deployment means may delay the inflation of the at least one body to ensure the at least one body does not inflate until the aircraft is in the water.

The activation system may be activated when the aircraft impacts with a body of water. Preferably one or more impact sensors detect when the aircraft impacts a body of water resulting, whereupon the activation system activates the inflation apparatus.

The activation system may be manually operated from within the aircraft. The manual activation system maybe wired directly from the aircraft's cockpit to the buoyancy system. The manual activation system maybe controlled remotely with a manual activation remote control placed in the aircraft's cockpit when the buoyancy system is fitted.

The buoyancy system may have a release means so that it can be detached/ jettisoned from the aircraft. The release means may be operated if the buoyancy system is unintentionally activated.

Preferably the buoyancy system may be easily attached and detached from the aircraft. As the buoyancy system Is only required for aircraft flying over large bodies of water, it is desirable to be able to easily attach and detach the buoyancy system to the aircraft to suit the aircrafts mission. In contrast to the prior art, the buoyancy system of this invention is configured to allow a technician to easily attach or detach the buoyancy system, as opposed to being permanently fixed to the aircraft. The present invention is also configured so that it may be attached or detached on the base, or in the field.

Preferably the buoyancy system is secured to the aircraft's airframe. In order to secure the buoyancy system to an aircraft, the aircraft's airframe may need to be modified prior to Installation.

The buoyancy system may be powered by its own independent power source or from a power source within the aircraft, or a combination of both.

Preferably the buoyancy system, when in the stored condition, does not substantially affect the flying characteristics or aerodynamics of the aircraft.

Preferably the buoyancy system can be disarmed to ensure accidental activation does not occur whilst maintenance staff are working on the aircraft which it is fitted to or whilst the buoyancy system Is in storage. For example, a tagged disarming pin which can be inserted in the buoyancy system when the system and/or aircraft that it is fitted to is not in use, and quickly removed prior to flying the aircraft to re-arm the buoyancy system.

This invention provides the next generation in emergency aircraft buoyancy and floatation. This new generation of emergency aircraft buoyancy and floatation provides a means of reducing the overall weight of the aircraft when flying over water and land whilst also providing a capability to keep the aircraft afloat should it crash or ditch into a body of water allowing aircraft occupants to escape at the surface and further allowing the aircraft to be recovered. The present disclosure provides a buoyancy system for keeping an aircraft afloat, and in most cases upright, upon landing, crashing or ditching into a body of water, the system comprises:

at least one inflatable body which, when inflates, increases the buoyancy of the aircraft;

an inflation apparatus to inflate the at least one Inflatable body;

a sensor and activation system to activate the inflation apparatus;

where upon meeting activation criteria or upon manual activation, the sensor and activation system will activate the inflation apparatus causing a gas to flow to the at least one inflatable body, which once inflated to the required volume enables the aircraft to remain positively buoyant at the surface of a body of water.

The present disclosure provides a buoyancy system adapted to be fitted to a helicopter for keeping the helicopter afloat and upright, upon landing, crashing or ditching Into a body of water, the system comprises:

at least one inflatable body which, when inflated, Increases the buoyancy of the helicopter, the at least one inflatable body being positioned on the helicopter such that once inflated the helicopter is maintained In an upright position, once inflated the at least one inflatable body being in proximity to the centre of gravity of the helicopter;

an inflation apparatus to inflate the at least one inflatable body;

a sensor and activation system to activate the inflation apparatus where upon meeting activation criteria or upon manual activation, the sensor and activation system will activate the inflation apparatus causing a gas to flow to the at least one inflatable body, which once inflated to the required volume enables the helicopter to remain positively buoyant at the surface of a body of water;

a deployment device, the deployment device restricting the inflation of the at least one inflatable body until the blades of the helicopter have detached from the helicopter or otherwise stopped rotating.

The present disclosure provides an aircraft having at least one buoyancy system as substantially herein described secured thereto.

The aircraft may be fitted with more than one buoyancy system.

### Brief Description of the Drawings

The invention will be better understood by reference to the following description of several specific embodiments thereof as shown in the accompanying drawings in which:
Figure 1a, b, c are side, plan and front views of a helicopter (Tiger ARH) having a buoyancy system according to a first embodiment of the invention Installed under each snub wing;
Figure 2a, b, c are similar views to figure 1a, b, c but with the buoyancy system deployed;
Figure 3 is a schematic layout of the buoyancy system of the first embodiment;
Figure 4 is a schematic layout of an at least one inflatable body within the buoyancy system;
Figure 5 a Is a view of a helicopter (Tiger ARH) post ditching floating on the surface of a body of water with the buoyancy system activated;
Figure 6a, b are side and plan views of a buoyancy system according to a second embodiment of the invention wherein the inflatable body is inflated;
Figure 7a, b are side and bottom views of a buoyancy system according to a third embodiment of the invention wherein the inflatable body is inflated;
Figure 8a Is a view of a helicopter (Tiger ARH) with a buoyancy system fitted;
Figure 8b is a view of the helicopter (Tiger ARH) in figure 8a in water In an upright orientation with the inflatable body deployed;
Figure 9a is a view of the helicopter (Tiger ARH) In figure 9a in water in an upright orientation with the inflatable bodies deployed;
Figure 10a, b is a view of a helicopter (MRH 90) with multiple inbuilt and/or semi permanent buoyancy systems fitted; and
Figure 10c the helicopter (MRH 90) in figure 10a in water in an upright orientation with the inflatable bodies deployed;

### Best Mode(s) for Carrying out the Invention

The present invention has many applications across numerous aircraft and provides significant advantages over the prior art.

The below embodiments discuss applications in which a helicopter ditches or crashes into a body of water. However, it is to be understood that the present invention may be fitted to other type of aircraft, those applications being covered by the present invention.

The invention according to the various embodiments is in the form of a buoyancy system 14 fitted to an helicopter 16 whereby, post activation, the buoyancy system 14 will keep the helicopter 15 afloat and maintain it in a substantially upright orientation near the surface off a body of water 16.

The buoyancy system 14 may quickly be removed from and easily attach to an helicopter 15, depending on whether the helicopter 15 will be flying over water. This ensures the weight of the helicopter can be optimised when flying over land where a buoyancy system is not required.

The buoyancy system 14 comprises a combination of one or more inflatable bodies 1, one or more gas generation systems 4, one or more sensor and activation systems 3, and one or more deployment means. In different applications and circumstances the buoyancy system 14 is configured to incorporated the required quantity and configuration of the aforementioned components.

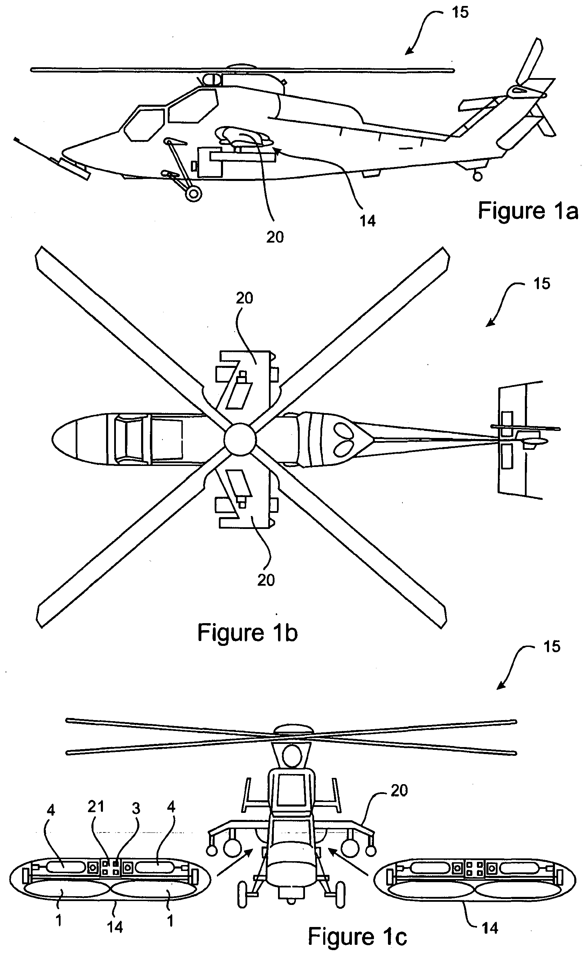

Referring to figures 1 to 5, the invention according to a first embodiment is in the form of a buoyancy system 14 fitted underneath each snub wing 20 of a helicopter 15.

Figures 1a, b, c show the helicopter 16 fitted with two buoyancy systems 14, whereby each buoyancy system 14 is in a stored condition, i.e. ready for activation.

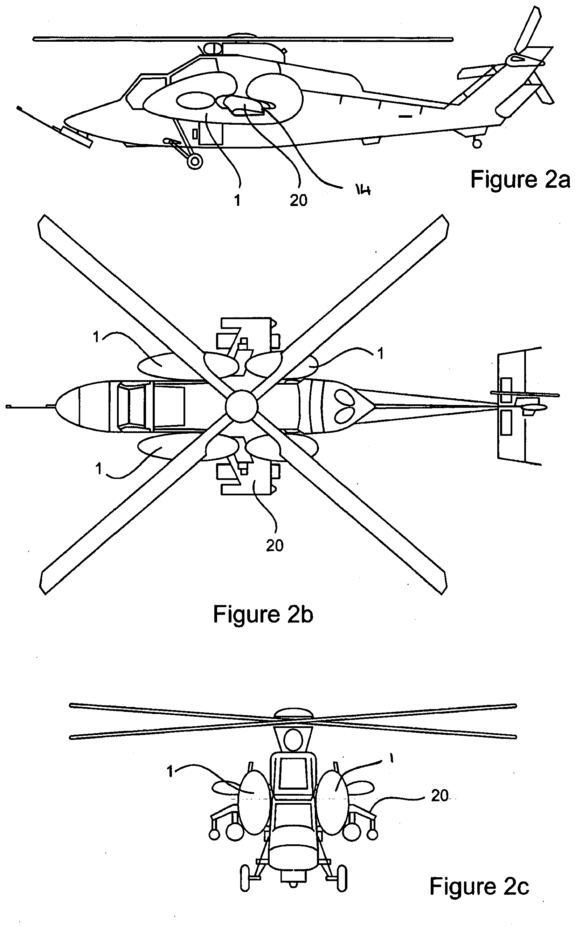

Figure 2a, b, c shows the buoyancy systems 14 after each buoyancy system has been activated and each inflatable body 1 has been deployed.

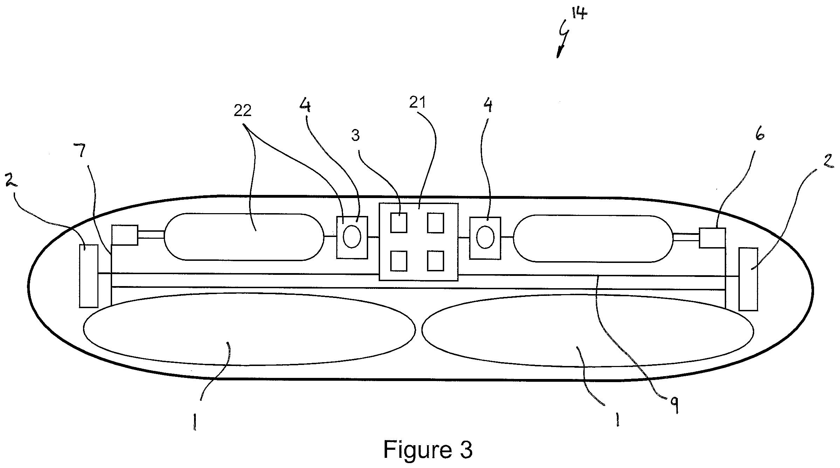

The components of each buoyancy system 14 according to this embodiment are best shown in figure 3. Each buoyancy system 14 comprises an inflation apparatus 22, which in this embodiment, is provided by two active gas generation systems 4.

Each gas generation system 4 is activated by an activation system 3. Upon activation, each gas generation system 4 generates a gas, which flows into and inflates each inflatable body 1.

The activation system 3 also comprises a plurality of sensors 21 which sense changes in various parameters affecting the helicopter 15. The sensors 21 in this embodiment include hydrostatic, impact, water and altimeter sensors which, upon sensing a change in the parameter they are monitoring, automatically activate the activation system 3. Some applications of the buoyancy system may only require one or a combination of these sensors and activation mediums.

The buoyancy system 14 also incorporates a hard wire and/or remote control mechanism (not shown) for manual activation of the activation system 3 should it be required.

Power is supplied to the activation system 3 from a power supply 2 through electrical wiring 9.

In operation, when one or more of the sensors 21 meet predetermine activation criteria, such as being submerged in water, the activation system 3 activates, providing an electrical charge to the gas generation system 4 through electrical wire 9. This electrical charge causes the gas generation system 4 to produce/supply a gas. The gas is supplied directly through a gas regulator 6. The gas is provided to the inflatable body 1 from the gas regulator 6 through pneumatic hose 7. Pneumatic hose 7 also incorporates a one way valve 18 to prevent the gas delivered into the inflatable body 1 from returning through the gas regulator 6.

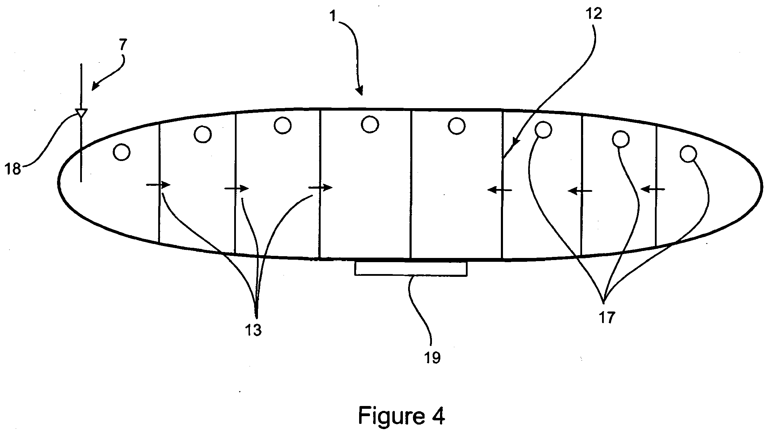

An inflated inflatable body 1 is shown in figure 4. The inflatable body 1 comprises internal walls 12, one-way flow valves 13, and pressure relief valves 17. in some applications of the invention, pressure relief valve 17 may lock, preventing any further gas from passing therethrough to ensure the inflatable body 1 remains inflated, such as may be the case when the Inflatable body is on the surface of the water. In use, should the inflatable body 1 be punctured, the configuration of the Inflatable body 1, ensures the unaffected part of the inflatable body 1 remains inflated such that the inflatable body 1 can still contribute to the buoyancy of the aircraft.

Each inflatable body 1 may also incorporate an EPIRB 19 which is activated when the inflatable body 1 is inflated.

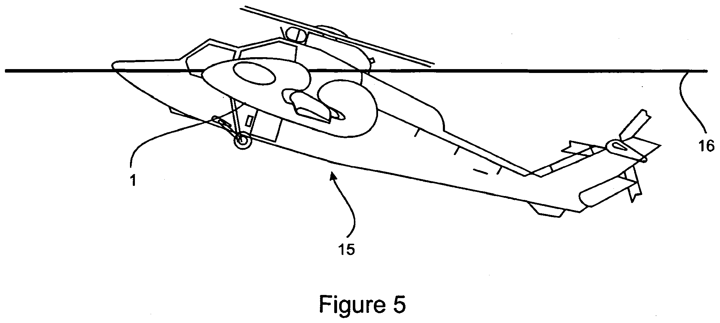

Figure 5 illustrates how the inflatable bodies 1 are positioned to ensure that the helicopter 15 remains upright and afloat on the surface of a body of water 16 once it has crashed into the water.

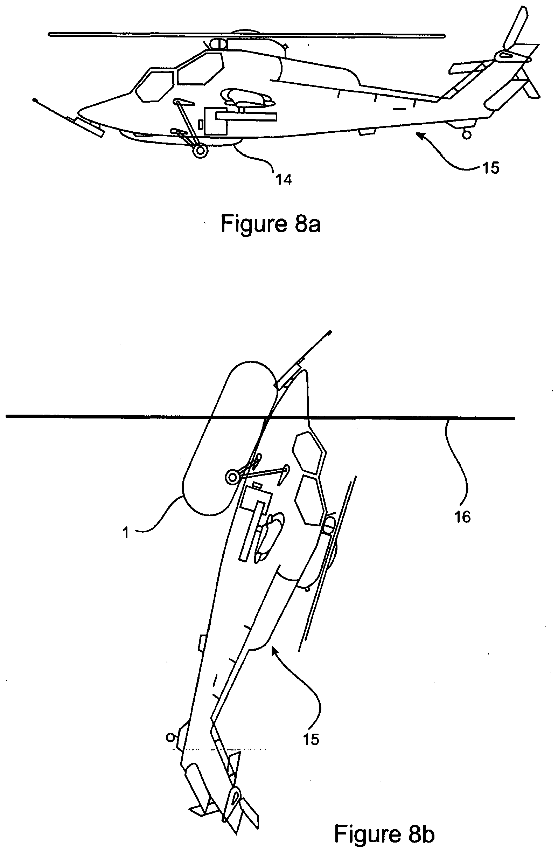

Figures 8a, b show a similar helicopter 15 as that shown In figure 5, but with only one buoyancy system 14 having only one inflatable body 1 secured under the cock pit of the helicopter in a forward position. As shown in figure 8b, the forward position of the buoyancy system 14 maintains the helicopter 15 in an upright position whereby the crew members and passenger are still able to escape without being disorientated.

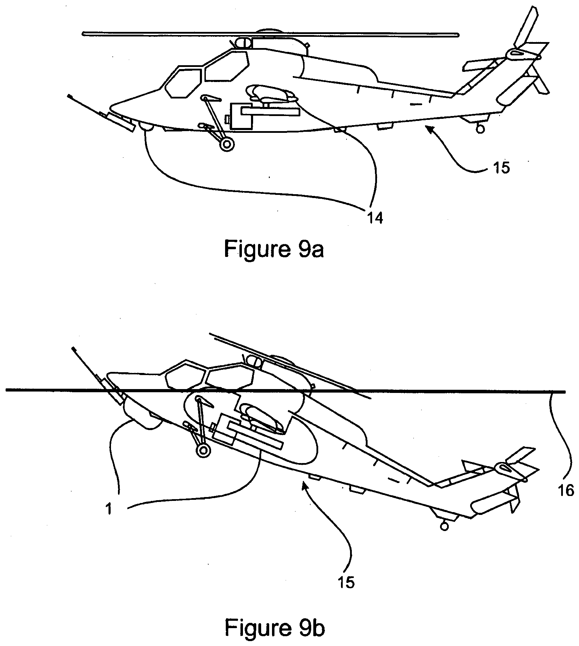

Figures 9a, b show a similar helicopter 15 as that shown in figure 5, whereby there is an additional buoyancy system 14 underneath the forward end of the helicopter.

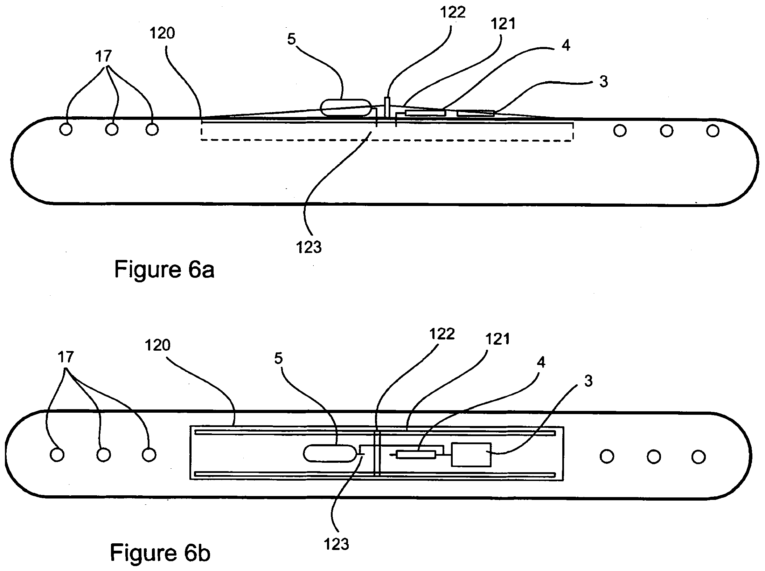

A second embodiment of the buoyancy system 14 is shown in figures 6a, b in which the inflatable body 1 is in an inflated condition. For convenience features of the second embodiment that are similar or correspond to features of the buoyancy system of the first embodiment have been referenced with the same reference numerals. The buoyancy system 14 in this embodiment is secured to a frame 120 to which the components of the buoyancy system 14 are secured. The frame 120 also comprises a mounting point 122 which is adapted to removably secure the buoyancy system 14 to a helicopter 15 in a manner whereby the buoyancy system may be quickly attached and detached to the helicopter.

The operation of this system is also similar to that described in figure 1. The only difference is that the gas generated by the gas generation system 4 is first delivered to a gas reservoir 5 prior to delivery to the gas regulator 6. This allows more control of the gas into the Inflatable body 1.

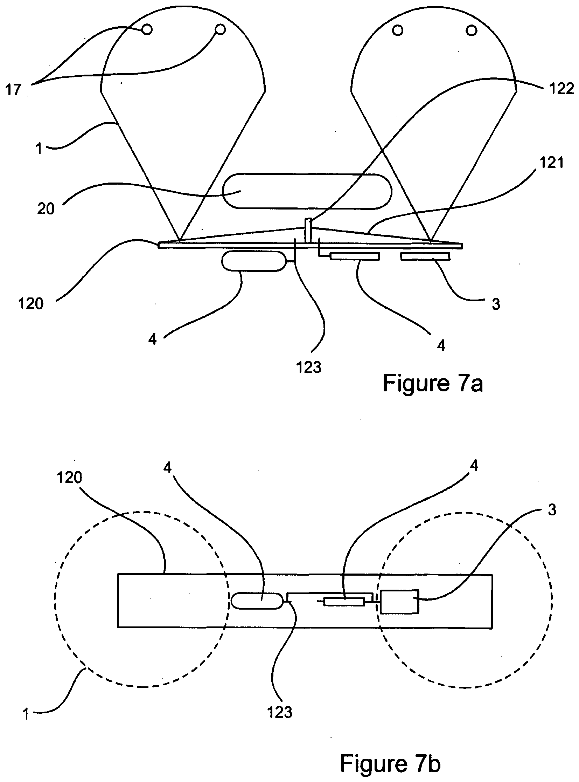

A third embodiment of the buoyancy system 14 is shown in figures 7a, b in which two inflatable bodies 1 are in an inflated condition. For convenience features of the third embodiment that are similar or correspond to features of the buoyancy system of the second embodiment have been referenced with the same reference numerals. The buoyancy system 14 in this embodiment is secured to a frame 120 to which the components of the buoyancy system 14 are secured. The frame 120 also comprises a mounting point 122 which is adapted to removably secure the buoyancy system 14 underneath snub wings 20 of to a helicopter 15 in a manner whereby the buoyancy system may be quickly attached and detached to the helicopter.

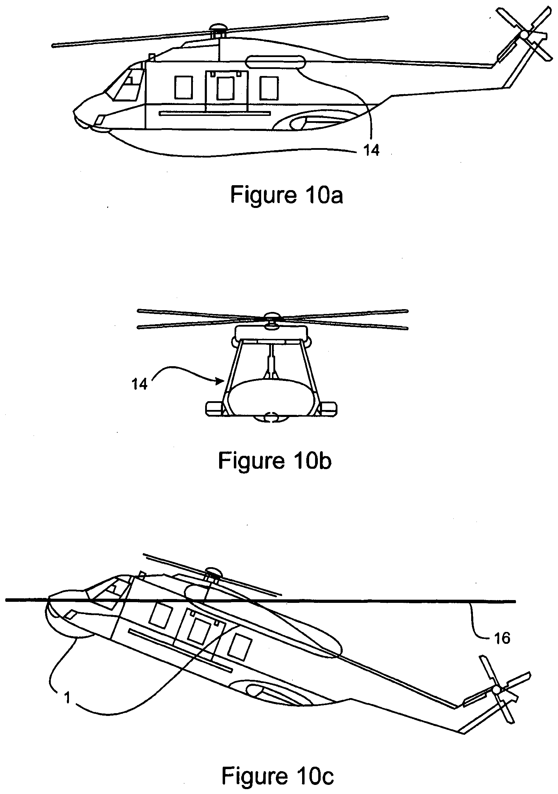

Figures 10a, b, c show three buoyancy systems 14 secured to a larger helicopter 15. The buoyancy system 14, when in the stored condition (figures 10 a, b) remain largely within the profile of the helicopter such that there is minimal Impact on the helicopters aerodynamics.

As identifted in the above embodiments, this invention provides a light weight solution for maintaining an aircraft at or near the surface of a body of water, and has the ability to be easily attached or detached from an aircraft.

Throughout the specification, unless the context requires otherwise, the word "comprise" or variations such as "comprises" or "comprising", will be understood to imply the Inclusion of a stated integer or group of Integers but not the exclusion of any other integer or group of integers.

## Claims

1. A buoyancy system (14) adapted to be fitted to an aircraft (15) for keeping the aircraft (15) afloat after crashing or ditching into a body of water (16), the system comprises:
at least one inflatable body (1) which, when inflated, increases the buoyancy of the aircraft (15);
an inflation apparatus (27) to inflate the at least one inflatable body (1), the inflation apparatus (27) comprises a gas generation system (4), wherein the gas generation system (4) comprises a gas generating medium to produce a gas to inflate the at least one inflatable body (1);
an activation system (3) to activate the inflation apparatus (27), wherein the activation system (3) is adapted to activate the inflation apparatus (27) upon meeting a crash activation criteria and to cause thereby the gas to flow to the at least one inflatable body (1), which once inflated to the required volume enables the aircraft (15) to remain positively buoyant at the surface of a body of water (16);
a deployment means in the form of a time delay device, **characterised in that** the deployment means is adapted to, in operation, restrict the inflation of the at least one inflatable body (1) until the at least one inflatable body (1) can be inflated without being damaged by moving parts of the aircraft (15), wherein the deployment means is adapted to prevent the at least one inflatable body (1) from inflating until after a prescribed period of time is achieved after activation of the activation system (3) when the activation criteria is met.

2. The buoyancy system (14) according to claim 1 wherein the at least one inflatable body (1) is adapted to inflate into a position that will keep the aircraft (15) upright at the surface of a body of water (16).

3. The buoyancy system (14) according to claim 1 or 2 wherein the inflated at least one inflatable body (1) is adapted to be positioned in proximity to an engine of the aircraft (15).

4. The buoyancy system (14) according to any one of the preceding claims wherein the deployment means is incorporated in the activation system (3).

5. The buoyancy system (14) according to any one of the preceding claims wherein the at least one inflatable body (1) incorporates internal walls and one way valves.

6. The buoyancy system (14) according to any one of the preceding claims wherein the at least one inflatable body (1) is made from a gas tight material having high heat resistance properties.

7. The buoyancy system (14) according to any one of the preceding claims further comprising a one way valve between the inflation apparatus (27) and an opening into the inflatable body (1).

8. The buoyancy system (14) according to any one of the preceding claims wherein the at least one inflatable body (1) comprises at least one pressure relief valve (17) to release excess gas from the inflatable body (1).

9. The buoyancy system (14) according to any one of the preceding claims wherein the aircraft (15) buoyancy system (14) comprises an inflation apparatus (27) for each inflatable body (1).

10. The buoyancy system (14) according to any one of the preceding claims wherein the inflation apparatus (27) comprises a regulatory apparatus to regulate the amount of gas passing into the at least one inflatable body (1), the gas regulator being adapted to deliver gas to the at least one inflatable body (1) at the desired pressure.

11. The buoyancy system (14) according to any one of the preceding claims wherein the gas generating medium is in the form of an explosive, propellant or other chemical compound whereby a charge activates the medium, creating the gas.

12. The buoyancy system (14) according to any one of the preceding claims wherein the inflation apparatus (27) may also comprise a gas storage system, the gas storage system comprises a gas storage cylinder (5) containing the gas, the gas storage cylinder (5) being in fluid communication with the at least one inflatable body (1) through an outlet passage.

13. The buoyancy system (14) according to any one of the preceding claims wherein the inflation apparatus (27) comprises at least one hydrostatic sensor (21) or pressure relief valve (17) which is adapted to discontinue the delivery of gas to the at least one inflatable body (1) once ascent has commenced when activation occurs after the aircraft (15) is submerged.

14. The buoyancy system (14) according to any one of the preceding claims wherein the activation system (3) is triggered by one or more of a plurality of different sensor (21)s for sensing different conditions, the sensor (21)s being adapted to detect one or more of the following criteria:
when the aircraft (15) is partially or wholly submerged;
when the aircraft (15) reaches a certain depth;
when the aircraft's (15) rate of decent exceeds a predetermined limit;
when the aircraft (15) impacts a body of water (16).

15. The buoyancy system (14) according to any one of the preceding claims wherein the deployment means is configure to delay the inflation of the at least one body to ensure the at least one body does not inflate until the aircraft (15) is in the water.

16. The buoyancy system (14) according to any one of the preceding claims comprising a release means so that the buoyancy system (14) can be detached/ jettisoned from the aircraft (15).

17. The buoyancy system (14) according to claim 16 wherein the release means is adapted to be operated if the aircraft (15) buoyancy system (14) is unintentionally activated.

18. The buoyancy system (14) according to any one of the preceding claims wherein the aircraft (15) buoyancy system (14) is adapted to be removably attached to the aircraft (15).

19. The buoyancy system (14) according to any one of the preceding claims wherein the buoyancy system (14) is adapted to be powered by its own independent power source or from a power source within the aircraft (15), or a combination of both.

20. The buoyancy system (14) according to any one of the preceding claims is adapted to be fitted to a helicopter for keeping the helicopter afloat upon crashing or ditching into a body of water (16),
whereby the at least one inflatable body (1) is adapted to be fitted to the helicopter such that upon inflation the at least one inflatable body (1) is in proximity to the centre of gravity, or forward of the centre of gravity of the helicopter; the system also comprises
a sensor (21) to activate the inflation apparatus (27), wherein the sensor (21) and activation system (3) are adapted to activate the inflation apparatus (27) upon meeting a crash activation criteria and to cause thereby the gas to be supplied to the at least one inflatable body (1), which once inflated to the required volume enables the helicopter to remain positively buoyant at the surface of a body of water (16);
wherein the deployment device is adapted to restrict the inflation of the at least one inflatable body
(1) until the blades of the helicopter have detached from the helicopter or otherwise stopped rotating.

21. An aircraft (15) having at least one buoyancy system (14) according to any one of the preceding claims fitted thereto.

## Patentansprüche

1. Auftriebssystem (14), das dafür ausgeführt ist, an einem Flugzeug (15) angebracht zu sein, um das Flugzeug (15) nach Absturz oder Notwasserung in ein bzw. auf einem Gewässer (16) über Wasser zu halten, wobei das System Folgendes aufweist:
wenigstens einen aufblähbaren Körper (1), der, wenn aufgebläht, die Schwimmfähigkeit des Flugzeugs (15) erhöht;
eine Aufblähvorrichtung (27) zum Aufblähen des wenigstens einen aufblähbaren Körpers (1), wobei die Aufblähvorrichtung (27) ein Gaserzeugungssystem (4) aufweist, wobei das Gaserzeugungssystem (4) ein Gaserzeugungsmedium zum Erzeugen eines Gases zum Aufblähen des wenigstens einen aufblähbaren Körpers (1) aufweist;
ein Aktivierungssystem (3) zum Aktivieren der Aufblähvorrichtung (27), wobei das Aktivierungssystem (3) dafür ausgeführt ist, die Aufblähvorrichtung (27) bei Erfüllung von Absturzaktivierungskriterien zu aktivieren und dadurch zu veranlassen, dass das Gas zu dem wenigstens einen aufblähbaren Körper (1) strömt, der, wenn er auf das erforderliche Volumen aufgebläht worden ist, das Flugzeug (15) befähigt, an der Oberfläche eines Gewässers (16) positiv schwimmend zu bleiben;
ein Betätigungsmittel in der Form einer Zeitverzögerungsvorrichtung, **dadurch gekennzeichnet, dass** das Betätigungsmittel dafür ausgeführt ist, im Betrieb die Aufblähung des wenigstens einen aufblähbaren Körpers (1) zu beschränken, bis der wenigstens eine aufblähbare Körper (1) aufgebläht werden kann, ohne durch bewegte Teile des Flugzeugs (15) beschädigt zu werden, wobei das Betätigungsmittel dafür ausgeführt ist, nach Aktivierung des Aktivierungssystems (3) bei Erfüllung der Aktivierungskriterien bis zum Erreichen einer vorgeschriebenen Zeitspanne zu verhindern, dass der wenigstens eine aufblähbare Körper (1) aufgebläht wird.

2. Auftriebssystem (14) nach Anspruch 1, wobei der wenigstens eine aufblähbare Körper (1) dafür ausgeführt ist, in eine Stellung aufgebläht zu werden, die das Flugzeug (15) an der Oberfläche eines Gewässers (16) aufrecht hält.

3. Auftriebssystem (14) nach Anspruch 1 oder 2, wobei der aufgeblähte wenigstens eine aufblähbare Körper (1) dafür ausgeführt ist, in der Nähe eines Triebwerks des Flugzeugs (15) positioniert zu sein.

4. Auftriebssystem (14) nach einem der vorhergehenden Ansprüche, wobei das Betätigungsmittel in das Aktivierungssystem (3) integriert ist.

5. Auftriebssystem (14) nach einem der vorhergehenden Ansprüche, wobei der wenigstens eine aufblähbare Körper (1) Innenwände und Einwegventile beinhaltet.

6. Auftriebssystem (14) nach einem der vorhergehenden Ansprüche, wobei der wenigstens eine aufblähbare Körper (1) aus einem gasdichten Material mit Eigenschaften hoher Hitzebeständigkeit hergestellt ist.

7. Auftriebssystem (14) nach einem der vorhergehenden Ansprüche, das ferner ein Einwegventil zwischen der Aufblähvorrichtung (27) und einer Öffnung in den aufblähbaren Körper (1) aufweist.

8. Auftriebssystem (14) nach einem der vorhergehenden Ansprüche, wobei der wenigstens eine aufblähbare Körper (1) wenigstens ein Druckentlastungsventil (17) zum Ablassen von überschüssigem Gas aus dem aufblähbaren Körper (1) aufweist.

9. Auftriebssystem (14) nach einem der vorhergehenden Ansprüche, wobei das Flugzeug- (15) -auftriebssystem (14) eine Aufblähvorrichtung (27) für jeden aufblähbaren Körper (1) aufweist.

10. Auftriebssystem (14) nach einem der vorhergehenden Ansprüche, wobei die Aufblähvorrichtung (27) eine Reguliervorrichtung zum Regulieren der in den wenigstens einen aufblähbaren Körper (1) hindurchströmenden Gasmenge aufweist, wobei der Gasregler dafür ausgeführt ist, dem wenigstens einen aufblähbaren Körper (1) Gas mit dem gewünschten Druck zuzuführen.

11. Auftriebssystem (14) nach einem der vorhergehenden Ansprüche, wobei das Gaserzeugungsmedium die Form einer explosiven, Treibmittel- oder anderen chemischen Verbindung hat, wodurch eine Ladung das Medium aktiviert, sodass das Gas erzeugt wird.

12. Auftriebssystem (14) nach einem der vorhergehenden Ansprüche, wobei die Aufblähvorrichtung (27) auch ein Gasspeichersystem aufweisen kann, wobei das Gasspeichersystem einen das Gas enthaltenden Gasspeicherzylinder (5) aufweist, wobei der Gasspeicherzylinder (5) durch einen Auslassdurchgang mit dem wenigstens einen aufblähbaren Körper (1) in Fluidverbindung steht.

13. Auftriebssystem (14) nach einem der vorhergehenden Ansprüche, wobei die Aufblähvorrichtung (27) wenigstens einen hydrostatischen Sensor (21) oder ein Druckentlastungsventil (17) aufweist, der bzw. das dafür ausgeführt ist, die Gaszufuhr zu dem wenigstens einen aufblähbaren Körper (1) zu unterbrechen, sobald der Aufstieg begonnen hat, wenn die Aktivierung nach Untertauchen des Flugzeugs (15) stattfindet.

14. Auftriebssystem (14) nach einem der vorhergehenden Ansprüche, wobei das Aktivierungssystem (3) von einem oder mehr von mehreren verschiedenen Sensoren (21) zum Erfassen verschiedener Bedingungen ausgelöst wird, wobei der bzw. die Sensor(en) (21) dafür ausgeführt ist bzw. sind, ein oder mehr der folgenden Kriterien zu erkennen:
wenn das Flugzeug (15) teilweise oder vollständig untergetaucht ist;
wenn das Flugzeug (15) eine gewisse Tiefe erreicht hat;
wenn die Sinkgeschwindigkeit des Flugzeugs (15) einen vorbestimmten Grenzwert übersteigt;
wenn das Flugzeug (15) auf ein Gewässer (16) aufprallt.

15. Auftriebssystem (14) nach einem der vorhergehenden Ansprüche, wobei das Betätigungsmittel zum Verzögern der Aufblähung des wenigstens einen Körpers gestaltet ist, um sicherzustellen, dass der wenigstens eine Körper nicht aufgebläht wird, bis das Flugzeug (15) im Wasser ist.

16. Auftriebssystem (14) nach einem der vorhergehenden Ansprüche, das ein Auslösemittel aufweist, sodass das Auftriebssystem (14) vom Flugzeug (15) abgetrennt/abgeworfen werden kann.

17. Auftriebssystem (14) nach Anspruch 16, wobei das Auslösemittel dafür ausgeführt ist, betätigt zu werden, wenn das Flugzeug- (15) -auftriebssystem (14) unabsichtlich aktiviert wird.

18. Auftriebssystem (14) nach einem der vorhergehenden Ansprüche, wobei das Flugzeug- (15) -auftriebssystem (14) dafür ausgeführt ist, abnehmbar am Flugzeug (15) angebracht zu sein.

19. Auftriebssystem (14) nach einem der vorhergehenden Ansprüche, wobei das Auftriebssystem (14) dafür ausgeführt ist, von seiner eigenen unabhängigen Energiequelle oder von einer Energiequelle innerhalb des Flugzeugs (15) oder einer Kombination von beiden mit Energie versorgt zu werden.

20. Auftriebssystem (14) nach einem der vorhergehenden Ansprüche, das dafür ausgeführt ist, an einem Hubschrauber angebracht zu sein, um den Hubschrauber bei Absturz oder Notwasserung in ein bzw. auf einem Gewässer (16) über Wasser zu halten,
wodurch der wenigstens eine aufblähbare Körper (1) dafür ausgeführt ist, so an dem Hubschrauber angebracht zu werden, dass der wenigstens eine aufblähbare Körper (1) sich bei Aufblähung in der Nähe des Schwerpunkts oder vor dem Schwerpunkt des Hubschraubers befindet; wobei das System auch Folgendes aufweist:
einen Sensor (21) zum Aktivieren der Aufblähvorrichtung (27), wobei der Sensor (21) und das Aktivierungssystem (3) dafür ausgeführt sind, die Aufblähvorrichtung (27) bei Erfüllung von Absturzaktivierungskriterien zu aktivieren und dadurch zu veranlassen, dass das Gas dem wenigstens einen aufblähbaren Körper (1) zugeführt wird, der, wenn er auf das erforderliche Volumen aufgebläht worden ist, den Hubschrauber befähigt, an der Oberfläche eines Gewässers (16) positiv schwimmend zu bleiben;
wobei die Betätigungsvorrichtung dafür ausgeführt ist, die Aufblähung des wenigstens einen aufblähbaren Körpers (1) zu beschränken, bis die Rotorblätter des Hubschraubers vom Hubschrauber abgetrennt wurden oder anders nicht mehr rotieren.

21. Flugzeug (15) mit wenigstens einem daran angebrachten Auftriebssystem (14) nach einem der vorhergehenden Ansprüche.

## Revendications

1. Système de flottabilité (14) adapté à des fins de montage sur un aéronef (15) pour maintenir l'aéronef (15) à flot après un écrasement ou un amerrissage forcé dans une masse d'eau (16), le système comporte :
au moins un corps gonflable (1) qui, quand il est gonflé, augmente la flottabilité de l'aéronef (15) ;
un appareil de gonflage (27) servant à gonfler ledit au moins un corps gonflable (1), l'appareil de gonflage (27) comporte un système de production de gaz (4), dans lequel le système de production de gaz (4) comporte un milieu de production de gaz servant à produire un gaz pour gonfler ledit au moins un corps gonflable (1) ;
un système d'activation (3) servant à activer l'appareil de gonflage (27), dans lequel le système d'activation (3) est adapté pour activer l'appareil de gonflage (27) quand des critères d'activation en cas d'écrasement sont satisfaits et pour de ce fait amener le gaz à s'écouler jusqu'audit au moins un corps gonflable (1), qui, une fois gonflé en fonction du volume requis, permet à l'aéronef (15) de rester positivement flottant au niveau de la surface d'une masse d'eau (16) ;
un moyen de déploiement sous la forme d'un dispositif à retardement,
**caractérisé en ce que** le moyen de déploiement est adapté pour, en cours de fonctionnement, limiter le gonflage dudit au moins un corps gonflable (1) jusqu'à ce que ledit au moins un corps gonflable (1) puisse être gonflé sans être endommagé par des pièces en mouvement de l'aéronef (15), dans lequel le moyen de déploiement est adapté pour empêcher ledit au moins un corps gonflable (1) de se gonfler jusqu'après l'écoulement d'une période de temps prescrite suite à l'activation du système d'activation (3) quand les critères d'activation sont satisfaits.

2. Système de flottabilité (14) selon la revendication 1, dans lequel ledit au moins un corps gonflable (1) est adapté pour se gonfler dans une position qui maintiendra l'aéronef (15) à la verticale au niveau de la surface d'une masse d'eau (16).

3. Système de flottabilité (14) selon la revendication 1 ou la revendication 2, dans lequel ledit au moins un corps gonflable gonflé (1) est adapté à des fins de positionnement à proximité d'un moteur de l'aéronef (15).

4. Système de flottabilité (14) selon l'une quelconque des revendications précédentes, dans lequel le moyen de déploiement est incorporé dans le système d'activation (3).

5. Système de flottabilité (14) selon l'une quelconque des revendications précédentes, dans lequel ledit au moins un corps gonflable (1) incorpore des parois internes et des soupapes de non-retour.

6. Système de flottabilité (14) selon l'une quelconque des revendications précédentes, dans lequel ledit au moins un corps gonflable (1) est réalisé à partir d'un matériau étanche aux gaz ayant des propriétés de haute résistance à la chaleur.

7. Système de flottabilité (14) selon l'une quelconque des revendications précédentes, comportant par ailleurs une soupape de non-retour entre l'appareil de gonflage (27) et une ouverture dans le corps gonflable (1).

8. Système de flottabilité (14) selon l'une quelconque des revendications précédentes, dans lequel ledit au moins un corps gonflable (1) comporte au moins une soupape de détente de pression (17) servant à libérer tout excès de gaz en provenance du corps gonflable (1).

9. Système de flottabilité (14) selon l'une quelconque des revendications précédentes, dans lequel le système de flottabilité (14) de l'aéronef (15) comporte un appareil de gonflage (27) pour chaque corps gonflable (1).

10. Système de flottabilité (14) selon l'une quelconque des revendications précédentes, dans lequel l'appareil de gonflage (27) comporte un appareil de régulation servant à réguler la quantité de gaz passant dans ledit au moins un corps gonflable (1), le régulateur de gaz étant adapté à des fins d'acheminement du gaz jusqu'audit au moins un corps gonflable (1) à la pression souhaitée.

11. Système de flottabilité (14) selon l'une quelconque des revendications précédentes, dans lequel le milieu de production de gaz est sous la forme d'un explosif, d'un agent propulseur ou d'une autre substance chimique ce par quoi une charge active le milieu, pour créer le gaz.

12. Système de flottabilité (14) selon l'une quelconque des revendications précédentes, dans lequel l'appareil de gonflage (27) peut également comporter un système de stockage de gaz, le système de stockage de gaz comporte un cylindre de stockage de gaz (5) contenant le gaz, le cylindre de stockage de gaz (5) étant en communication fluidique avec ledit au moins un corps gonflable (1) par l'intermédiaire d'un passage de sortie.

13. Système de flottabilité (14) selon l'une quelconque des revendications précédentes, dans lequel l'appareil de gonflage (27) comporte au moins un capteur hydrostatique (21) ou une soupape de détente de pression (17) qui est adapté(e) à des fins d'interruption de l'acheminement de gaz jusqu'audit au moins un corps gonflable (1) une fois que la montée a commencé quand l'activation a lieu après la submersion de l'aéronef (15).

14. Système de flottabilité (14) selon l'une quelconque des revendications précédentes, dans lequel le système d'activation (3) est déclenché par un ou plusieurs d'une pluralité de différents capteurs (21) servant à détecter différentes conditions, les capteurs (21) étant adaptés pour détecter un ou plusieurs parmi les critères suivants :
quand l'aéronef (15) est partiellement ou entièrement submergé ;
quand l'aéronef (15) atteint une certaine profondeur ;
quand la vitesse verticale de descente de l'aéronef (15) dépasse une limite prédéterminée ;
quand l'aéronef (15) percute une masse d'eau (16).

15. Système de flottabilité (14) selon l'une quelconque des revendications précédentes, dans lequel le moyen de déploiement est configuré pour retarder le gonflage dudit au moins un corps pour faire en sorte que ledit au moins un corps ne se gonfle pas avant que l'aéronef (15) ne soit dans l'eau.

16. Système de flottabilité (14) selon l'une quelconque des revendications précédentes, comportant un moyen de libération de telle sorte que le système de flottabilité (14) peut être détaché/largué de l'aéronef (15).

17. Système de flottabilité (14) selon la revendication 16, dans lequel le moyen de libération est adapté à des fins de fonctionnement si le système de flottabilité (14) de l'aéronef (15) est activé involontairement.

18. Système de flottabilité (14) selon l'une quelconque des revendications précédentes, dans lequel le système de flottabilité (14) de l'aéronef (15) est adapté pour être attaché de manière libérable à l'aéronef (15).

19. Système de flottabilité (14) selon l'une quelconque des revendications précédentes, dans lequel le système de flottabilité (14) est adapté pour être alimenté par sa propre source d'alimentation indépendante ou en provenance d'une source d'alimentation dans l'aéronef (15), ou une combinaison des deux.

20. Système de flottabilité (14) selon l'une quelconque des revendications précédentes, adapté à des fins de montage sur un hélicoptère pour maintenir l'hélicoptère à flot après un écrasement ou un amerrissage forcé dans une masse d'eau (16), ce par quoi ledit au moins un corps gonflable (1) est adapté à des fins de montage sur l'hélicoptère de telle sorte que, dès le gonflage, ledit au moins un corps gonflable (1) se trouve à proximité du centre de gravité, ou en avant par rapport au centre de gravité de l'hélicoptère ; le système comporte aussi
un capteur (21) servant à activer l'appareil de gonflage (27), dans lequel le capteur (21) et le système d'activation (3) sont adaptés pour activer l'appareil de gonflage (27) quand des critères d'activation en cas d'écrasement sont satisfaits et pour de ce fait amener le gaz à être acheminé jusqu'audit au moins un corps gonflable (1), qui, une fois gonflé en fonction du volume requis, permet à l'hélicoptère de rester positivement flottant au niveau de la surface d'une masse d'eau (16) ;
dans lequel le dispositif de déploiement est adapté pour limiter le gonflage dudit au moins un corps gonflable (1) jusqu'à ce que les hélices de l'hélicoptère aient été détachées de l'hélicoptère ou se soient autrement arrêtées de tourner.

21. Aéronef (15) ayant au moins un système de flottabilité (14) selon l'une quelconque des revendications précédentes monté sur celui-ci.
